# FASCICULE DE BREVET EUROPEEN

(11) **EP 2 607 191 B1**
(45) Date de publication et mention de la délivrance du brevet: **01.05.2019**
(21) Numéro de dépôt: 12196263.3
(22) Date de dépôt: 10.12.2012
(51) Int. Cl.: B60S 1/52

(54) **Dispositif d'essuyage de vitre comprenant un moyen de limitation d'une courbure prise par un tube souple d'alimentation en liquide de lavage**
Scheibenreinigungsvorrichtung, die ein Begrenzungsmittel für die Krümmung eines Reinigungsmittel-Zuführschlauchs umfasst
Windscreen-wiper device comprising a means for limiting a curvature adopted by a flexible tube for supplying washing liquid

(30) Priorité: 19.12.2011 FR 1161898
(43) Date de publication de la demande: 26.06.2013
(73) Titulaire: Valeo Systèmes d'Essuyage, 78322 Le Mesnil Saint Denis (FR)
(72) Inventeur: Jarasson, Jean-Michel, 78321 LE MESNIL SAINT DENIS (FR)
(74) Mandataire: Callu-Danseux, Violaine

(56) Documents cités:
- WO-A1-2005/073040
- DE-U1- 8 708 171
- FR-A1- 2 727 365
- FR-A5- 2 239 875
- US-A- 3 008 170

## Description

La présente invention concerne le domaine technique des dispositifs d'essuyage de vitre pour un véhicule automobile.

On sait qu'un véhicule automobile est couramment équipé d'un dispositif d'essuyage pour assurer un essuyage d'une vitre, par exemple, de son pare-brise et éviter ainsi que la vision qu'a le conducteur de son environnement soit troublée.

Un tel dispositif d'essuyage comprend au moins une bielle ou barre, agencée pour être montée sur le véhicule et pour être entraînée par un système d'actionnement du véhicule, et un bras mobile d'essuyage, agencé pour être monté sur ladite bielle et effectuer un mouvement de va-et-vient angulaire. Le bras mobile est porteur d'une lame racleuse, aussi appelée balai d'essuyage, réalisée en une matière élastique, qui frotte contre la vitre et évacue l'eau en l'amenant en dehors du champ de vision du conducteur. Le bras mobile comprend une structure et une tige, appelée entraîneur, agencée pour fixer le bras mobile sur la bielle et montée sur la structure par un axe transversal qui autorise leur rotation relative.

Afin d'acheminer un liquide de lavage sur le pare-brise du véhicule, on connaît un dispositif d'essuyage comprenant en outre un tube d'alimentation en liquide de lavage comprenant un ou plusieurs conduits. Le liquide de lavage est acheminé par le tube d'alimentation, depuis un réservoir d'un dispositif de distribution situé dans le véhicule, et projeté en direction d'une vitre du véhicule par des gicleurs situés sur le bras mobile ou sur le balai d'essuyage. Le tube d'alimentation est ainsi raccordé, d'une part, au dispositif de distribution de liquide de lavage du véhicule, et, d'autre part, au bras mobile du dispositif d'essuyage.

Un tel tube d'alimentation est fait d'un matériau souple de sorte à pouvoir se courber lorsque le bras mobile du dispositif d'essuyage sur lequel il est fixé effectue un mouvement de va-et-vient angulaire.

Cependant, un tel mouvement de va-et-vient répété du bras mobile entraîne une pluralité d'élongations et de compressions répétées du tube d'alimentation en, au moins, un endroit localisé du tube, par exemple dans sa portion la plus courbée, une telle sollicitation peut provoquer une usure prématurée pouvant provoquer une fissure, voire une rupture du tube d'alimentation.

Le document US 3 008 170 A1 montre un dispositif comme décrit dans le préambule de la première revendication.

L'invention a pour but de remédier à ces inconvénients, notamment en fournissant une solution bon marché, simple et de montage aisé.

A cet effet, elle concerne un dispositif d'essuyage de vitre pour un véhicule automobile comprenant au moins une bielle, un bras mobile entraîné en rotation par ladite bielle pour effectuer un mouvement de va-et-vient angulaire, un tube souple d'alimentation en liquide de lavage, solidaire dudit bras mobile, et un moyen de limitation d'une courbure prise par ledit tube souple d'alimentation configuré pour entourer le tube souple d'alimentation de sorte à lui éviter une fissure.

Un tel moyen de limitation prend son importance notamment en raison du fait que le tube souple d'alimentation peut comprendre des éléments tel qu'un ou plusieurs fils électriques chauffants. Il est important de ne pas risquer de couper ces fils pour limiter tout risque de dégradation du véhicule.

Selon un aspect de l'invention, le moyen de limitation présente un profil qui autorise un mouvement selon la courbure dans un unique plan, ce profil interdisant tout mouvement dans des plans distincts et concourants à l'unique plan.

Le moyen de limitation est ainsi agencé pour éviter que des pliures répétées du tube d'alimentation entraînent une fissure ou une rupture du tube. En d'autres termes, un tel moyen de limitation limite la courbure du tube de manière à ce que cette dernière soit supérieure à une valeur seuil déterminée, pouvant entraîner une fissure ou une rupture.

Avantageusement, le moyen de limitation entoure le tube d'alimentation sur sa portion la plus courbée. Par le terme « portion la plus courbée », on entend la zone du tube d'alimentation comprise entre le bras mobile et la bielle au niveau de laquelle le tube est courbé de manière à former sensiblement un U. Le moyen de limitation du tube est ainsi agencé pour éviter une déformation ou une pliure du tube dans la portion du tube d'alimentation qui présente le plus de risque de fissure ou de rupture.

Selon l'invention, le moyen de limitation se présente sous la forme d'un élément allongé entourant le tube souple d'alimentation et déformable transversalement à sa longueur. Un élément unique présente l'avantage d'être aisé à monter sur le tube d'alimentation. La déformabilité de l'élément allongé transversalement à sa longueur lui permet de se déformer régulièrement en tout point de sa longueur, c'est à dire progressivement, pour accompagner les mouvements transversaux du tube d'alimentation provoqués par les mouvements de va-et-vient du bras mobile.

Selon l'invention, l'élément allongé comprend deux extrémités, l'une desdites extrémités est fixée soit à un élément du bras mobile, soit à une première bielle. Avantageusement, le bras mobile comprend un élément principal et un entraîneur relié à au moins une bielle. L'entraîneur relie le bras mobile à un axe de pivotement de ce bras mobile. Dans ce cas, l'une des extrémités de l'élément allongé est fixée à l'élément principal du bras mobile ou à son entraîneur.

La fixation des extrémités de l'élément allongé permet, d'une part, d'éviter que les mouvements du bras mobile ne le déplacent, par exemple, hors d'une portion du tube susceptible de pliures répétées et, d'autre part, de permettre une meilleure absorption ou limitation des déformations du tube d'alimentation sur toute la longueur d'extension de l'élément allongé.

Avantageusement, l'élément allongé est extensible. Un tel élément allongé s'étend ou s'étire ainsi en fonction des contraintes auxquelles les déformations du tube d'alimentation accompagnant les mouvements de va-et-vient du bras mobile le soumettent. Un tel élément allongé peut se présenter, par exemple, sous la forme d'un filet tubulaire ou d'un ressort hélicoïdal.

Ainsi, selon un aspect de l'invention, l'élément allongé comprend des spires de sorte à présenter une pluralité d'espaces entre les spires lorsqu'il est courbé. Un tel élément à spires permet en outre, par sa pluralité de spires, de conférer au tube d'alimentation à la fois une rigidité suffisante pour éviter les fissures et une souplesse suffisante pour éviter que les contraintes de force induites par les mouvements de va-et-vient du bras mobile se déportent sur d'autres portions du tube d'alimentation, par exemple, au niveau des points d'attache du tube d'alimentation respectivement au dispositif de distribution et sur le bras mobile, ce qui pourrait conduire là aussi à des fissures ou rupture du tube d'alimentation à ces endroits.

Selon une caractéristique de l'invention, l'élément allongé se présente sous la forme d'un ressort hélicoïdal. Un tel ressort hélicoïdal est bon marché, aisé à fabriquer et à monter autour du tube d'alimentation étant donné qu'il n'est constitué que d'un élément hélicoïdal extensible. Un tel ressort hélicoïdal peut être formé d'une matière plastique ou métallique. Un tel ressort hélicoïdal permet en outre, de par sa pluralité de spires consécutives, de suivre régulièrement, au niveau de chaque spire, les déformations du tube d'alimentation. Un tel ressort hélicoïdal, de par sa pluralité de spires consécutives et donc sa souplesse transversale, n'est en outre pas susceptible de coincement pouvant entraver le bon fonctionnement du dispositif d'essuyage du véhicule. Un tel ressort hélicoïdal peut en outre être aisément fixé sur le dispositif d'essuyage par ses deux extrémités, de sorte que les déformations du tube d'alimentation provoquées par les mouvements de va-et-vient du bras mobile soient absorbées par le ressort hélicoïdal transversalement.

Dans une forme de réalisation de l'invention, le ressort hélicoïdal est fixé, d'une part, par l'une de ses extrémités, sur une bielle du dispositif d'essuyage, et, d'autre part, par son autre extrémité, sur l'entraîneur du dispositif d'essuyage.

Selon une caractéristique de l'invention, le tube d'alimentation est, par exemple, formé d'une matière plastique.

Selon un aspect de l'invention, le tube d'alimentation en liquide de lavage comprend au moins un conduit et, avantageusement, deux conduits, l'un, une pluralité, ou l'ensemble des conduits pouvant être entourés du moyen de limitation.

Selon un autre aspect de l'invention, le tube d'alimentation comprend un moyen chauffant, notamment noyé dans la matière constitutive du tube ou installé dans le ou les conduits.

L'invention concerne aussi un ensemble comprenant un tube d'alimentation en liquide de lavage d'une vitre pour véhicule automobile et un moyen de limitation tels que définis ci-dessus.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 représente une vue partielle en perspective d'un dispositif d'essuyage selon l'invention.
La figure 2 représente une vue partielle du dispositif d'essuyage de la figure 1 épurée, par souci de visibilité, de son cache, de sa seconde bielle et de son entraîneur.

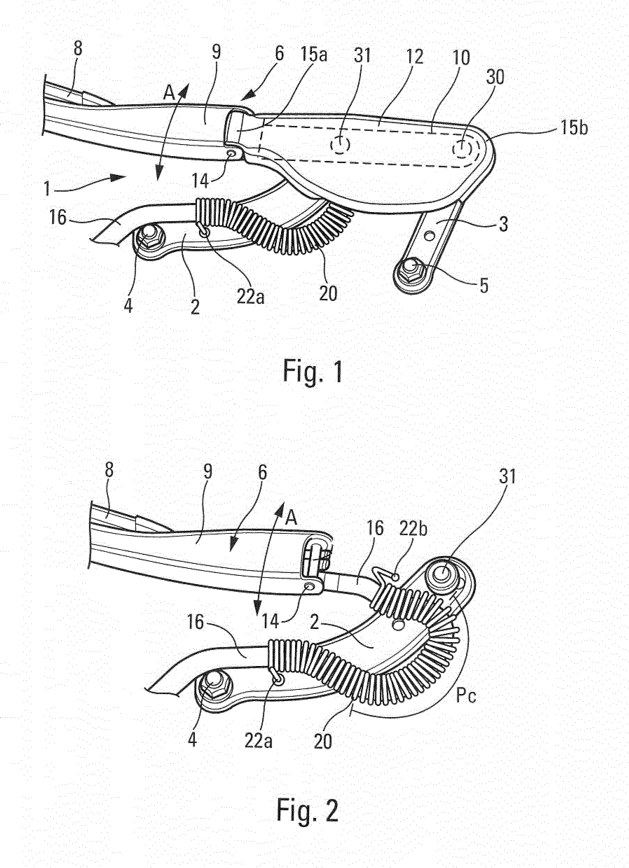

Le dispositif d'essuyage 1 représenté par la figure 1 comprend une première bielle 2 et une seconde bielle 3 agencées pour monter le dispositif d'essuyage 1 sur un véhicule automobile, non représenté, par deux liaisons mécaniques, ici du type vis-écrou, respectivement 4 et 5.

Les bielles 2 et 3 sont couplées, au niveau des systèmes vis-écrou 4 et 5, à un système d'actionnement, non représenté, agencé pour les entraîner en rotation.

Ces bielles mobiles 2 et 3 sont agencées pour entraîner dans leurs mouvements un bras mobile 6 dans un mouvement de va-et-vient angulaire A, de sorte à essuyer une vitre du véhicule, tel que, par exemple, son pare-brise, au droit duquel le dispositif d'essuyage 1 est monté.

Le bras mobile 6 comprend un premier élément 9, nommé « élément principal » et un deuxième élément 10, nommé « entraîneur ». L'entraineur 10 relie l'élément principal 9 à un point de pivotement 30 du bras mobile 6, un tel entraineur est représenté en pointillé sur la figure 1.

La bielle mobile 2 se présente ici sous la forme d'une bielle de forme incurvée et dont les extrémités sont arrondies. La bielle mobile 3 se présente ici sous la forme d'une bielle de forme sensiblement rectiligne et dont les extrémités sont arrondies. Les bielles mobiles 2 et 3 peuvent être métalliques ou bien en matière plastique. Les formes évoquées ci-dessus sont variables suivant le véhicule porteur du dispositif d'essuyage.

L'élément principal 9 du bras mobile 6 reçoit un balai d'essuyage 8, comprenant une lame racleuse réalisée en une matière élastique, qui frotte contre la vitre et évacue l'eau en l'amenant en dehors du champ de vision du conducteur du véhicule. Le balai d'essuyage 8 est monté, comme illustré par les figures 1 et 2, à une extrémité libre de l'élément principal 9 opposée à l'extrémité dudit élément principal 9 recevant l'entraîneur 10.

L'entraîneur 10 se présente ici sous la forme d'une tige. Un cache 12 recouvre l'entraîneur 10. L'entraîneur 10 est notamment à la fois relié au point de pivotement 30 du bras d'essuyage et relié aux bielles 2 et 3 par, le point de pivotement 30 pour la deuxième bielle 3 et par un point d'articulation 31, pour la première bielle 2. Le point de pivotement 30 et le point d'articulation 31 sont par exemple des liaisons pivot.

L'entraîneur 10 est monté sur l'élément principal 9 par un axe transversal 14 qui autorise leur rotation relative de sorte à autoriser, ou non, le contact du balai d'essuyage 8 avec la vitre du véhicule, notamment de sorte à pouvoir soulever la lame racleuse de la vitre, par exemple, pour la remplacer.

L'élément principal 9 du bras mobile 6 se présente ici sous la forme d'une structure allongée dont la base est creuse et agencée pour recevoir à une première extrémité, le balai d'essuyage 8, et à une seconde extrémité, l'entraîneur 10 et une partie du cache 12.

Le cache 12 se présente sous la forme d'une pièce allongée, recouvrant partiellement l'entraîneur 10 de sorte à cacher les liaisons mécaniques de fixation de l'entraineur 10 sur les bielles 2 et 3 et protéger les utilisateurs d'un risque de coincement des doigts. Le cache 12 présente une forme sensiblement plane et comprenant une extrémité 15a de fixation sur le bras mobile 6 et une extrémité 15b partiellement arrondie et recouvrant partiellement la deuxième bielle 3. L'extrémité 15a du cache 12 est plus particulièrement fixée au niveau de l'axe transversal 14 et donc au niveau de la liaison entre l'élément principal 9 et l'entraîneur 10.

Afin d'acheminer du liquide de lavage sur une vitre du véhicule, le dispositif d'essuyage 1 comprend un tube d'alimentation 16 en liquide de lavage comprenant au moins un unique conduit. Dans l'exemple des figures, le tube d'alimentation 16 comprend deux conduits, non évidence sur les figures. Le liquide de lavage est acheminé par le tube d'alimentation 16 depuis un réservoir d'un dispositif de distribution, non représenté, situé dans le véhicule puis est projeté en direction d'une vitre du véhicule par des gicleurs situés sur le balai d'essuyage 8. Le tube d'alimentation 16 est ainsi raccordé, d'une part, au dispositif de distribution de liquide de lavage du véhicule, et d'autre part, au bras mobile 6 dont il est solidaire.

Le tube d'alimentation 16 est constitué d'un matériau souple, tel que par exemple un matériau plastique, un élastomère ou un éthylène-propylène-diène monomère (EPDM), de sorte à pouvoir se courber lorsque le bras mobile 6 du dispositif d'essuyage 1 effectue un mouvement de va-et-vient angulaire.

Comme illustré par les figures 1 et 2, un moyen de limitation d'une courbure prise par le tube souple d'alimentation 16 est monté sur ledit tube. Le moyen de limitation se présente ici sous la forme d'un élément allongé et plus précisément d'un ressort hélicoïdal 20 entourant le tube souple d'alimentation 16 de sorte à le maintenir et lui éviter de se fissurer consécutivement à des déformations répétées provoquées par les mouvements de va-et-vient du bras mobile 6. Cette forme de réalisation n'est bien sûr pas limitative de la portée de la présente invention dans la mesure où le moyen de limitation pourrait se présenter sous la forme d'un filet tubulaire, d'une gaine, d'un élément comprenant une ou plusieurs spires consécutives ou non, ou de toute autre structure possédant les caractéristiques fonctionnelles propres à la présente invention.

Le ressort hélicoïdal 20 peut être métallique, en matière plastique, en caoutchouc ou en toute matière ou alliage apte à constituer un tel ressort hélicoïdal.

Comme illustré par la figure 2, le ressort hélicoïdal 20 entoure le tube d'alimentation 16 sur sa portion la plus courbée Pc qui est une portion présentant un fort risque de fissure ou de rupture consécutivement à des déformations provoquées par les mouvements de va-et-vient du bras mobile 6. Cette portion Pc correspond ici, comme illustré par la figure 2, à la zone du tube d'alimentation comprise entre le bras mobile 6 et la première bielle 2 au niveau de laquelle le tube d'alimentation 16 est courbé de manière à former sensiblement un U.

Le ressort hélicoïdal 20 est déformable, ici de par ses spires, à la fois transversalement à sa longueur et selon sa longueur, c'est-à-dire dans ce dernier cas qu'il est extensible. Le ressort hélicoïdal 20 est ainsi apte à se déformer en tout point de sa longueur, c'est à dire progressivement, comme illustré par les figures 1 et 2, notamment sur la portion Pc, au niveau de laquelle les spires s'écartent entre elles progressivement, pour accompagner les mouvements transversaux du tube d'alimentation 16 provoqués par les mouvements de va-et-vient du bras mobile 6.

Le ressort hélicoïdal 20 comprend deux extrémités 22a et 22b. L'extrémité distale 22a, par rapport au bras mobile 6, est ici fixée à la première bielle 2 du dispositif d'essuyage 1 et l'extrémité proximale 22b est ici fixée sur l'entraîneur 10. La figure 2 illustrant une vue partielle du dispositif d'essuyage 1 épurée, par souci de visibilité, de l'entraîneur 10, du cache 12 et de la seconde bielle mobile 3, l'extrémité 22b est, sur cette figure, présentée « en l'air ».

Bien entendu, l'une ou l'autre des extrémités du ressort hélicoïdal 20 pourrait être fixée en tout point de ces éléments ou bien sur un autre élément du dispositif d'essuyage 1 tel quel le cache 12 ou l'élément principal 9 du bras mobile 6.

Dans une forme de réalisation de l'invention, le tube d'alimentation 16 comprend en outre un moyen chauffant noyé dans la matière constitutive du tube ou installé dans le ou les conduits de sorte à chauffer le liquide de lavage.

En fonctionnement du dispositif d'essuyage 1, le mouvement de va-et-vient angulaire A du bras mobile 6 provoque un déplacement et des déformations du tube d'alimentation 16. Le ressort hélicoïdal 20, fixé par ses extrémités à la première bielle 2 et au bras mobile 6 et entourant le tube d'alimentation 16 sur sa portion la plus courbée, permet de limiter les déformations du tube d'alimentation 16, c'est-à-dire de limiter la courbure prise par le tube d'alimentation 16 de manière à ce que cette dernière soit supérieure à une valeur seuil déterminée de sorte à éviter une fissure ou une rupture du tube d'alimentation 16.

## Revendications

1. Dispositif d'essuyage de vitre pour un véhicule automobile comprenant au moins un bielle (2, 3), un bras mobile (6) entraîné en rotation par ladite bielle (2, 3) pour effectuer un mouvement de va-et-vient angulaire (A), un tube souple d'alimentation (16) en liquide de lavage, solidaire dudit bras mobile (6), le dispositif comprenant en outre un moyen de limitation (20) d'une courbure prise par ledit tube souple d'alimentation (16) configuré pour entourer le tube souple d'alimentation (16), de sorte à lui éviter une fissure, le moyen de limitation se présentant sous la forme d'un élément allongé (20) entourant le tube souple d'alimentation (16) et déformable transversalement à sa longueur, **caractérisé en ce que** ledit élément allongé (20) comprend deux extrémités (22a, 22b), l'une desdites extrémités étant fixée soit à un élément du bras mobile (6), soit à une première bielle (2).

2. Dispositif selon la revendication 1, dans lequel le moyen de limitation (20) entoure le tube d'alimentation (16) sur sa portion la plus courbée (Pc).

3. Dispositif selon la revendication 1 ou 2, dans lequel le bras mobile (6) comprend un élément principal (9) et un entraîneur (10) relié à au moins une bielle (2, 3), ledit entraîneur reliant le bras mobile (6) à un axe de pivotement dudit bras mobile, et dans lequel l'une des extrémités (22a) de l'élément allongé (20) est fixée audit élément principal (9) ou audit entraîneur (10).

4. Dispositif selon l'une des revendications précédentes, dans lequel l'élément allongé (20) est extensible.

5. Dispositif selon la revendication 4, dans lequel l'élément allongé (20) comprend des spires de sorte à présenter une pluralité d'espaces entre les spires lorsqu'il est courbé.

6. Dispositif selon l'une des revendications précédentes, dans lequel l'élément allongé se présente sous la forme d'un ressort hélicoïdal (20).

7. Dispositif selon l'une des revendications précédentes, dans lequel le tube d'alimentation (16) comprend au moins un conduit entouré du moyen de limitation.

8. Dispositif selon l'une des revendications précédentes, dans lequel le tube d'alimentation (16) comprend deux conduits entourés du moyen de limitation.

9. Dispositif selon l'une des revendications précédentes, dans lequel le tube d'alimentation (16) comprend un moyen chauffant noyé dans la matière constitutive du tube ou installé dans le ou les conduits.

## Patentansprüche

1. Scheibenreinigungsvorrichtung für ein Kraftfahrzeug, umfassend mindestens eine Stange (2, 3), einen beweglichen Arm (6), der in Drehung von der Stange (2, 3) angetrieben wird, um eine winkelige Hin- und Herbewegung (A) auszuführen, einen Zuführschlauch (16) eines Reinigungsmittels, der mit dem beweglichen Arm (6) fest verbunden ist, wobei die Vorrichtung ferner ein Begrenzungsmittel (20) einer von dem Zuführschlauch (16) angenommenen Krümmung umfasst, das eingerichtet ist, um den Zuführschlauch (16) zu umgeben, um einen Riss desselben zu vermeiden, wobei das Begrenzungsmittel in Form eines länglichen Elements (20) vorhanden ist, das den Zuführschlauch (16) umgibt, und das quer zu seiner Länge verformbar ist, **dadurch gekennzeichnet, dass** das längliche Element (20) zwei Enden (22a, 22b) umfasst, wobei eines der Enden entweder an einem Element des beweglichen Arms (6) oder an einer ersten Stange (2) befestigt ist.

2. Vorrichtung nach Anspruch 1, bei der das Begrenzungsmittel (20) den Zuführschlauch (16) auf seinem am stärksten gekrümmten Abschnitt (Pc) umgibt.

3. Vorrichtung nach Anspruch 1 oder 2, bei der der bewegliche Arm (6) ein Hauptelement (9) und ein Antriebselement (10), das mit mindestens einer Stange (2, 3) verbunden ist, umfasst, wobei das Antriebselement den beweglichen Arm (6) mit einer Schwenkachse des beweglichen Arms verbindet, und bei der eines der Enden (22a) des länglichen Elements (20) am Hauptelement (9) oder am Antriebselement (10) befestigt ist.

4. Vorrichtung nach einem der vorhergehenden Ansprüche, bei der das längliche Element (20) ausziehbar ist.

5. Vorrichtung nach Anspruch 4, bei der das längliche Element (20) Windungen umfasst, um eine Vielzahl von Räumen zwischen den Windungen aufzuweisen, wenn es gekrümmt ist.

6. Vorrichtung nach einem der vorhergehenden Ansprüche, bei der das längliche Element in Form einer Spiralfeder (20) vorhanden ist.

7. Vorrichtung nach einem der vorhergehenden Ansprüche, bei der der Zuführschlauch (16) mindestens eine Leitung umfasst, die von dem Begrenzungsmittel umgeben ist.

8. Vorrichtung nach einem der vorhergehenden Ansprüche, bei der der Zuführschlauch (16) zwei Leitungen umfasst, die von dem Begrenzungsmittel umgeben sind.

9. Vorrichtung nach einem der vorhergehenden Ansprüche, bei der der Zuführschlauch (16) ein Heizmittel umfasst, das in das Material, das den Schlauch bildet, eingelassen oder in der oder den Leitung(en) installiert ist.

## Claims

1. Window wiping device for a motor vehicle comprising at least one link (2, 3), a mobile arm (6) driven in rotation by said link (2, 3) to effect an angular to-and-fro movement (A), a flexible washing liquid feed tube (16), rigidly fastened to said mobile arm (6), the device further comprising means (20) for limitation of a curvature assumed by said flexible feed tube (16) configured to surround the flexible feed tube (16) so as to prevent it cracking, the limitation means taking the form of an elongate element (20) around the feeder flexible tube (16) and deformable transversely to its length, **characterized in that** the elongate element (20) has two ends (22a, 22b), one of said ends being fixed either to an element of the mobile arm (6) or to a first link (2).

2. Device according to Claim 1, wherein the limitation means (20) surrounds the most curved portion (Pc) of the feed tube (16).

3. Device according to Claim 1 or 2, wherein the mobile arm (6) comprises a main element (9) and a driver (10) connected to at least one link (2, 3), said driver connecting the mobile arm (6) to a pivot shaft of said mobile arm, and wherein one end (22a) of the elongate element (20) is fixed to said main element (9) or to said driver (10).

4. Device according to any one of the preceding claims, wherein the elongate element (20) is extensible.

5. Device according to Claim 4, wherein the elongate element (20) comprises turns so as to feature a plurality of spaces between the turns when it is curved.

6. Device according to any one of the preceding claims, wherein the elongate element takes the form of a coil spring (20).

7. Device according to any one of the preceding claims, wherein the feed tube (16) comprises at least one pipe surrounded by the limitation means.

8. Device according to any one of the preceding claims, wherein the feed tube (16) comprises two pipes surrounded by the limitation means.

9. Device according to any one of the preceding claims, wherein the feed tube (16) comprises heating means embedded in the material constituting the tube or installed in the pipe or pipes.
